# EUROPÄISCHE PATENTANMELDUNG

(11) **EP 0 985 521 A1**
(43) Veröffentlichungstag der Anmeldung: **15.03.2000**
(21) Anmeldenummer: 98115939.5
(22) Anmeldetag: 24.08.1998
(51) Int. Cl.: B30B 15/06, B30B 15/34, B29C 33/06

(54) **Anordnung zur Beheizung der Oberfläche eines Gegenstands, insbesondere eines Pressen- oder Formteils**

(71) Anmelder: Omni-Pac GmbH, 26931 Elsfleth/Weser (DE)
(72) Erfinder: Meyer, Andreas, D-26135 Oldenburg (DE); Friedrichs, Ralf, D-28844 Weyhe (DE); Schmitt, Ulf, D-26135 Oldenburg (DE)
(74) Vertreter: Glawe, Delfs, Moll & Partner

(57) **Zusammenfassung**

Anordnung zur Beheizung der Oberfläche eines Gegenstands, insbesondere eines Pressen- oder Formteils. Zur Beheizung werden Strahlungs-Gasbrenner verwendet. Die zu beheizende Oberfläche wird überwiegend von zu ihrer Flächenerstreckung um mehr als 30° geneigten Teilflächen gebildet. Sie kann beispielsweise gewaffelt sein.

## Beschreibung

Die Erfindung bezieht sich auf eine Anordnung zur Beheizung der Oberfläche eines Gegenstands, insbesondere eines Pressen- oder Formteils.

Manche Formmassen bedürfen in der Form oder der Presse der Beheizung zur Aushärtung oder zum Austreiben eines Lösungs- oder Dispersionsmittels. Neben Kunststoff und Kautschuk gehören dazu Faserstoffmassen, beispielsweise aus Holzschliffpulpe, die zunächst an eine Sieboberfläche schichtbildend angesaugt werden und anschließend formgepreßt und dabei durch Verdampfung entwässert werden. Es ist bekannt, derartige Form- bzw. Pressenteile elektrisch oder mittels Wärmeträgeröl zu beheizen. Die Erfindung sucht nach einer besonders wirtschaftlichen und leicht regelbaren Beheizung.

Sie erreicht dieses Ziel durch die Verwendung von Strahlungsbrennern in Verbindung mit einer besonderen Formgebung der damit zusammenwirkenden Oberfläche der zu beheizenden Teile. Diese Gestaltung zeichnet sich dadurch aus, daß die Oberfläche überwiegend von zu ihrer Flächenerstreckung um mehr als 30° geneigten Teilflächen gebildet ist.

Vorzugsweise ist die Oberfläche gewaffelt, d. h., daß sie aus einer Vielzahl von Pyramiden zusammengesetzt ist, deren Seitenflächen mindestens die angegebene Neigung haben. Vorzugsweise liegt diese Neigung zwischen 40° und 50°. Die Neigung sollte vorzugsweise 80° der zu beheizenden Fläche erfassen. Besonders bewährt hat sich eine gewaffelte Oberflächenform, bei der die Pyramiden einander unmittelbar benachbart sind. Verwendbar sind aber auch Oberflächen, auf denen die geneigten Flächen in anderer Form verteilt sind, bspw. als Flanken von Nuten oder unregelmäßige Erhöhungen und Vertiefungen.

Man erhält auf diese Weise eine vorzügliche Wärmeübertragung von den Strahlungsbrennern auf die zu beheizende Oberfläche. Dies gilt sowohl für die Absorption der Wärmestrahlung als auch für den Wärmeübergang bezüglich des von den Brennern erzeugten Heißgases.

Zur weiteren Verbesserung der Strahlungsabsorption kann die Oberfläche strahlungsabsorptionsfördernd behandelt sein. Sie kann insbesondere geschwärzt sein. Beispielsweise kann eine Aluminiumoberfläche in Verbindung mit einer anodisch oxidierten Oberflächenschicht strahlungsabsorbierend gefärbt sein.

Bei den Brennern handelt es sich vorzugsweise um Gasbrenner. Sie können aber auch mit einem anderen fossilen Brennstoff betrieben werden.

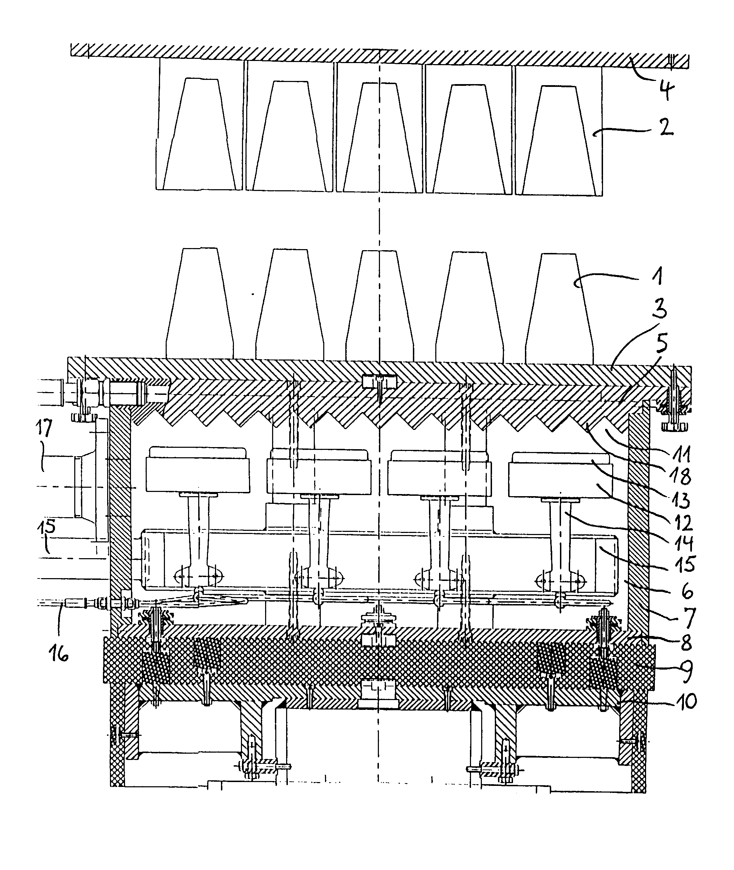

Die Erfindung wird im folgenden näher unter Bezugnahme auf die Zeichnung erläutert, die ein vorteilhaftes Ausführungsbeispiel veranschaulicht. Die einzige Figur zeigt einen schematischen Querschnitt durch die Anordnung.

Zueinander komplementäre Formteile 1, 2 werden von Preßplatten 3, 4 getragen, die jeweils mit einer Heizanordnung verbunden sind. Gezeigt ist lediglich die zu den Formen 1 gehörige Heizanordnung. Die zu den Formen 2 gehörige Heizanordnung hat man sich spiegelsymmetrisch übereinstimmend vorzustellen.

Die Preßplatte 3 ist wärmeleitend verbunden mit einer Heizplatte 5, unter welcher sich ein Hohlraum 6 befindet, der seitlich von Wänden 7 und gegenüber der Heizplatte 5 von einer Abschlußplatte 8 begrenzt ist. Die Abschlußplatte 8 ist über eine Wärmedämmplatte 9 mit einer allgemein mit der Bezugsziffer 10 bezeichneten Tragstruktur verbunden, die es gestattet, die Formen 1, 2 derart beweglich zu führen, daß sie genau passend ineinandergefahren werden können.

In dem Hohlraum 6 befindet sich gleichmäßig über die Oberfläche 11 der Heizplatte 5 verteilt eine Vielzahl von Strahlungs-Gasbrennern 12 handelsüblicher Bauart, die jeweils eine poröse Platte als Strahlungsplatte 13 aufweisen, an welcher die Verbrennung stattfindet, und die dadurch die gewünschte Strahlung erzeugt. Vorzugsweise besteht die poröse Platte aus einer Vliesplatte aus Mineral- oder Edelstahlfasern. Die Strahlungsplatten 13 erstrecken sich im wesentlichen parallel zu der Oberfläche 11 und haben von dieser eine Entfernung von wenigen Zentimetern, nämlich nicht wesentlich mehr als zur Abfuhr der Verbrennungsgase erforderlich ist. Die Brenner 12 sind in bekannter Weise über ein Mischrohr 14 an Rohre 15, 16 für die Zufuhr von Brenngas bzw. Luft oder Sauerstoff oder Luft/Sauerstoff-Gemisch angeschlossen. Bei 17 ist an den Hohlraum 6 ein Abzug für die Verbrennungsgase angeschlossen.

Die Oberfläche 11 der Heizplatte 5 wird von einer Vielzahl quadratischer Pyramiden 18 gebildet, deren Seitenflächen unter etwa 45° zur Erstreckungsebene der Fläche 11 geneigt sind. Der Schnitt der Darstellung ist durch die Spitzen einer Reihe solcher Pyramiden geführt. Diese grenzen sowohl in der Schnittebene als auch lotrecht dazu zwischenraumfrei aneinander, d. h. Zwischenflächen, die eine geringere Neigung als 45° haben, werden vermieden.

Die Heizplatte 5 besteht aus Aluminium. Die Oberfläche 11 ist mit einer geschwärzten Oxidschicht versehen, die einen hohen Strahlungsabsorptionskoeffizienten besitzt.

Diese Anordnung ergibt einen sehr hohen Beheizungswirkungsgrad, der beträchtlich höher ist als derjenige einer elektrischen Beheizung oder einer solchen mit Wärmeträgeröl. Da die Heizkosten bei der Entwässerung von Pulpeformkörpern einen erheblichen Anteil an den Kosten haben, wird dadurch eine beträchtliche Ersparnis erzielt.

## Patentansprüche

1. Anordnung zur Beheizung eines Pressen- oder Formteils, das von der einen Seite einer Platte getragen ist, deren andere Seite der Wirkung einer Wärmequelle ausgesetzt ist, dadurch gekennzeichnet, daß die Platte geteilt ist in eine die Pressen- oder Formteile tragende Pressenplatte und eine mit der Wärmequelle verbundene Heizplatte, die wärmeleitend, fest aber lösbar miteinander verbunden sind.

2. Anordnung nach Anspruch 1, dadurch gekennzeichnet, daß die der Wärmequelle zugewandte Oberfläche der Heizplatte strahlungsabsorptionsfördernd behandelt ist.

3. Anordnung nach einem der Ansprüche 1 oder 2, dadurch gekennzeichnet, daß die der Wärmequelle zugewandte Oberfläche der Heizplatte überwiegend aus zu ihrer Flächenerstreckung um mehr als 30° geneigten Teilflächen besteht.

4. Anordnung nach einem der Ansprüche 1 bis 3, dadurch gekennzeichnet, daß die der Wärmequelle zugewandte Oberfläche der Heizplatte gewaffelt ist.

5. Anordnung nach einem der Ansprüche 1 bis 4, dadurch gekennzeichnet, daß die der Wärmequelle zugewandte Oberfläche der Heizplatte geschwärzt ist.

6. Anordnung nach einem der Ansprüche 1 bis 5, dadurch gekennzeichnet, daß die Heizplatte aus Aluminium besteht und die der Wärmequelle zugewandte Oberfläche der Heizplatte mit einer geschwärzten Oxidschicht versehen ist.

7. Anordnung nach einem der Ansprüche 1 bis 6, dadurch gekennzeichnet, daß die Wärmequelle aus mindestens einem Strahlungsbrenner besteht.

8. Anordnung nach Anspruch 7, dadurch gekennzeichnet, daß es sich bei den Strahlungsbrennern um Gasbrenner handelt.

9. Anordnung nach Anspruch 7 oder 8, dadurch gekennzeichnet, daß der Abstand der Strahlungsbrenner zur Heizplatte nicht größer ist, als zur Abfuhr von Verbrennungsgasen erforderlich.
